# EUROPEAN PATENT APPLICATION

(11) **EP 4 148 020 A1**
(43) Date of publication of application: **15.03.2023**
(21) Application number: 21196360.8
(22) Date of filing: 13.09.2021
(51) Int. Cl.: C01C 1/04, C25B 1/04

(54) **METHOD FOR CONTROLLING AN AMMONIA PLANT**

(71) Applicant: CASALE SA, 6900 Lugano (CH)
(72) Inventor: CORBETTA, Michele, 22100 Como (IT); OSTUNI, Raffaele, 6900 Lugano (CH); BIALKOWSKI, Michal Tadeusz, 5417 Untersiggenthal (CH); FILIPPI, Ermanno, 6976 Castagnola (CH)
(74) Representative: M. Zardi & Co S.A.

(57) **Abstract**

Method for controlling an ammonia plant (1), wherein the ammonia plant (1) comprises an ammonia synthesis section (202) with an ammonia converter and a hydrogen generation section (200) connected to a hydrogen storage tank (5), the method includes controlling the amount of hydrogen (13) stored or delivered to the ammonia synthesis section to maintain target ranges of: the amount of hydrogen contained in the hydrogen tank (5); the flow rate of hydrogen delivered to the ammonia synthesis section; the flow rate of feed gas fed to said ammonia converter.

## Description

### Field of application

The invention is in the field of ammonia production. In particular, the invention relates to a method for controlling an ammonia plant, and to an ammonia plant and ammonia synthesis process which implement said method.

### Prior art

In the industrial production of ammonia, a suitable make-up gas, which is a mixture of hydrogen and nitrogen in a suitable ratio, is produced in a front-end and catalytically reacted in a reaction section to produce ammonia. Particularly the production of the make-up gas requires the production of gaseous hydrogen. The proper amount of nitrogen is introduced with combustion air e.g. in the context of secondary reforming and/or separately prepared, e.g. by separation from air. The ammonia synthesis reaction is performed in a converter which is typically part of a so-called ammonia synthesis loop.

Conventionally, hydrogen is generated via a reforming process of a hydrocarbon source or a carbonaceous source such as for example natural gas or coal. In a reforming-based process the hydrogen source (e.g. the above mentioned hydrocarbon source or a carbonaceous source) is practically constant over time and therefore the whole process and related equipment are designed to operate substantially in a steady-state regime with limited fluctuation around the nominal capacity, e.g. from 70% to 110% of a nominal capacity.

There is an emerging interest, however, towards more flexible ammonia plants, adapted to operate with a time variable hydrogen source, wherein the flowrate and other parameters of the hydrogen stream that can be produced by said source can vary significantly over time. This is typically the case of hydrogen produced from a renewable energy source, for example from solar-powered electrolysis of water.

The production of hydrogen from renewable energy, in the context of ammonia production, is very interesting because it can reduce or eliminate the emissions of CO2 (so-called "green" ammonia plants). However, it introduces the problem of how to cope with the variable output of such renewable energy-based production of hydrogen. As stated above, the conventional ammonia plants are designed to operate with a constant or nearly constant input of hydrogen, therefore they are generally not able to follow the typical fluctuation of a renewable energy source, especially the time variation of hydrogen flow rate.

A fluctuation of the hydrogen source causes a fluctuation of the make-up gas flow rate delivered to the ammonia synthesis section. Said synthesis section however may be unable to tolerate such fluctuation, for example the ammonia converter may be unable to remain in a self-sustained operation when the make-up gas input is too small, resulting in a shutdown and related loss of production.

A conventional solution to the above problem is the provision of a hydrogen storage. Said storage may temporarily compensate for a lack of production of the hydrogen source acting as a hydrogen intermediate buffer. However, this solution has the drawback of the cost for said hydrogen buffer storage. Hydrogen must be stored under elevated pressure and the related cost is quite high. For example, for an ammonia plant which uses hydrogen from a water electrolysis driven by electricity produced in a solar photovoltaic field without any energy storage and without a connection to electric grid, a large storage of hydrogen is necessary to ensure stable production of ammonia to compensate for the shortfall of electricity during night time. The cost for this storage would strongly reduce the competitiveness and advantage of the "green" approach to the production of ammonia.

WO2021/089276 A1 discloses a method for controlling an ammonia synthesis loop running at a partial load.

### Summary of the invention

The invention deals with the problem of how to adapt an ammonia plant and process to a variable source of hydrogen. Particularly, the invention faces the problem of how to reduce the need of hydrogen storage in an ammonia plant, when the production of ammonia make-up gas relies partly or entirely on a variable source of hydrogen. The invention faces the challenge of operating the so-called green ammonia plants with a small H2 storage and achieving a cost-effective control of such plants. The invention deals specifically with the problem of the hydrogen storage and how to reduce it while maintaining a stable operation of the plant and process when the hydrogen source is affected by fluctuations.

Particularly the invention aims to avoid reaction extinction and depressurization of the ammonia synthesis loop at decreased loads and to avoid over-pressurization of the loop at high loads, using a comparatively small hydrogen storage to reduce the related cost.

This problem is solved with a method for controlling an ammonia plant according to the claims.

The method is applied to an ammonia plant comprising: an ammonia synthesis section, a hydrogen generation section and a hydrogen storage tank. The ammonia plant may comprise other sections without limitations, including a nitrogen generation section. The ammonia synthesis section includes an ammonia converter where ammonia is synthesized at an ammonia synthesis pressure starting from a feed gas including hydrogen and nitrogen.

The method comprises controlling the items:
a) a total amount of hydrogen delivered by the hydrogen generation section to said ammonia synthesis section;
b) a proportion between hydrogen currently produced in the hydrogen generation section and hydrogen withdrawn from said storage tank in the hydrogen of point a) above;
c) an amount of hydrogen sent to the hydrogen storage tank.

According to the invention, the above control is performed to maintain target ranges of: i) the amount of hydrogen contained in the hydrogen tank (5); ii) the flow rate of hydrogen delivered to the ammonia synthesis section and/or the flow rate of feed gas reacted in the ammonia converter; iii) the rate change over time of at least one of the flow rates of point ii).

The target ranges ii) and iii) are selected to keep the ammonia converter in a condition of autothermal operation, that is to avoid a loss of reaction and/or shutdown of the converter.

According to b), the hydrogen delivered to the ammonia synthesis section may contain from 0% to 100% of hydrogen instantly produced in the hydrogen generation section, from 0% to 100% of hydrogen taken from the storage tank, or any combination thereof, including a portion of hydrogen instantly produced and a portion of hydrogen taken from storage. The proper combination can be selected based on the targets i), ii) and iii) as above mentioned.

The invention provides a dynamic control of the hydrogen storage which allows a significant reduction of the size and cost of the hydrogen storage compared to the conventional art. Accordingly, the invention opens new interesting possibilities for producing ammonia from renewable energy-based hydrogen and consequently for the so-called de-carbonization of ammonia plants. The plant itself is more flexible than a conventional one, and able to keep producing ammonia in a wider range of plant capacities (10-110%).Having a comparatively small hydrogen storage can be beneficial to reduce the levelized cost of ammonia (LCOA) and the capital expenditure (CAPEX) of the ammonia plant because the ammonia synthesis loop and its converter must not be sized to accommodate the peak hydrogen generation from the electrolyzer, but can be designed to a smaller value, as the peak production can be sent to the storage. Adding a hydrogen storage introduces an extra cost for the storage itself but, on the other hand, allows to install a smaller and less expensive converter for a given capacity. The extra cost for the hydrogen storage is more than compensated by the saving of the smaller converter. This is particularly true in case of a highly variable power profile with a small capacity factor. Said capacity factor is defined as the ratio between the yearly power generation and the peak installed power capacity.

An ammonia plant using the method of the invention can accept variable hydrogen and nitrogen inputs from renewables, economically. Hence it can promote a larger penetration of renewable energies in the ammonia market, boosting the production of the so-called green ammonia.

Further aspects of the invention are an ammonia plant and a process according to the claims. Still a further aspect of the invention is a method of retrofitting an ammonia plant according to the claims.

### Detailed description of the invention

The invention is particularly interesting for ammonia plants wherein hydrogen is produced from a renewable energy source, such as solar energy, due to the intrinsic fluctuation of such sources. However, it should be appreciated this is not a precondition and the invention may also be applied to conventional ammonia plants having time variable flow rate of feed hydrogen to reduce the need of a large hydrogen intermediate storage. A variable input of hydrogen, or of energy to produce hydrogen, may also be dictated or selected on the basis of cost issues. For example, hydrogen may be produced with energy imported from a grid during time slots when the cost of energy is low; the ammonia production may rely at least partly on the hydrogen storage in time slots when the cost of energy is high.

The invention is applicable to ammonia plants wherein the hydrogen is entirely or partially produced from a renewable source or to hybrid plants wherein hydrogen is partly produced from a renewable source and partly from a conventional source such as reforming. In some embodiments, hydrogen may be produced from electric energy (e.g. by electrolysis) wherein the electric energy is partially or entirely produced from a renewable source. Preferred sources of renewable power include solar and wind.

In the various embodiments of the invention, a preferred process for the production of hydrogen from a renewable energy source is the electrolysis of water. Particularly preferably, the electrolysis of water may be powered by solar energy or wind energy.

The invention is applicable, according to interesting embodiments, to so-called islanded or semi-islanded ammonia systems using a renewable energy source for the production of hydrogen. An islanded system denotes a system with no grid connection; a semi-islanded system denotes a system with a grid connection which is used, however, under limited conditions. In an islanded system the electric power input under normal operation may be entirely provided by a renewable source such as solar power.

In an embodiment of the invention, hydrogen is produced from renewable power and the ammonia plant is an islanded plant, that is not connected to an electric grid; the plant includes a backup power system arranged to provide at least the power for the operation of the ammonia plant in a condition wherein low or no hydrogen is produced by the hydrogen generation section. A condition of low output of the hydrogen generation section may occur for example when the renewable power is 10% or less than nominal. Accordingly the hydrogen input is provided by predominantly or entirely by the hydrogen storage.

The above condition of ammonia plant running on backup power is for example the case of an ammonia plant with solar-based production of hydrogen during night time or more generally when the solar energy is not available or is very low e.g. due to heavy cloud cover.

The backup power is sized to ensure operation of the various equipment of the ammonia plant, particularly of the hydrogen compressor and nitrogen compressor which are necessary to raise hydrogen and nitrogen to the ammonia synthesis pressure. When running on backup power, said compressors may be operated at reduced load, if compatible with stable operation.

Said backup power is preferably produced by any of: a gas turbine, a gas engine, fuel cells or suitable batteries. Said gas turbine, gas engine and fuel cells are preferably fired with hydrogen or ammonia. The use of batteries for backup power may be preferred for wind-powered plants because wind energy typically has short-period fluctuations which may be efficiently compensated by a battery. For solar-based systems (e.g. photovoltaic), due to day/night periodicity, the installation of turbine, engine or fuel cell is preferred.

In an electrolyzer-based ammonia plant, the backup power is practically sized to operate all equipment except the electrolyzer. In embodiments of interest, 90% or more of the power input is absorbed by the electrolyzer. Hence the backup power may be to 10% or less of the peak power required by the plant. In some embodiments the backup power may be 5% to 10% or less than 5% of the peak power.

An advantage of the above described backup power operation is that the islanded ammonia plant is kept running at a minimum load, avoiding a complete shutdown, when the main source of energy is not available or has a very low output. An islanded ammonia plant according to the invention can be installed in remote locations where there is no electric grid and still operate in a profitable manner. Another advantage is that an islanded ammonia plant can produced ammonia which is truly a "green ammonia", i.e. produced with energy entirely obtained from renewable sources.

In a semi-islanded system, most of the electric power is generated internally in the system by the renewable source, and the grid connection is used to provide a minimum amount of power when the renewable source is not available, or to absorb peaks in the event that the power output of the renewable source is greater than required for the target production of ammonia.

For a semi islanded green ammonia plant with dedicated renewable power generation and grid-connection, the grid connection is provided to guarantee always the availability of a minimum amount of power to run the plant at the minimum load (e.g. importing electricity during night in case of solar PV renewable power generation) and to absorb peaks of renewable power generation. A related advantage of applying the present invention to semi-islanded plant is that the import of grid electric power is minimized and this can reduce the overall cost of production of ammonia if grid electricity is expensive.

The ammonia synthesis section comprises an ammonia synthesis reactor (ammonia converter) suitable to react the make-up gas into a gaseous product containing ammonia, over an appropriate catalyst. Said converter is normally part of an ammonia synthesis loop.

The ammonia synthesis loop may comprise, further to the ammonia converter, a circulator which is a compressor configured to maintain circulation in the loop and to feed the ammonia converter; a condenser arranged downstream the converter for condensation of the ammonia-containing effluent; a separator wherein the ammonia product, after condensation, is separated into an ammonia liquid product and a gaseous recycling stream containing unconverted matter, a recycling line from the separator to the suction side of the circulator.

In a preferred embodiment, the loop comprises a bypass line of the ammonia converter, arranged to allow some of the make-up gas delivered by the circulator to bypass the ammonia converter. The bypass flow rate can be controlled to maintain the synthesis loop pressure at an acceptable value when operating at a reduced load, according to the loop pressure control method disclosed by WO2021/089276 A1. Very preferably, the hydrogen storage control of the present invention can be combined with said loop pressure control.

The ammonia converter is fed with ammonia make-up gas. The term ammonia make-up gas denotes a gaseous mixture containing hydrogen and nitrogen in a suitable H/N ratio for the ammonia synthesis. Said ratio is normally 3:1 or around 3:1.

The ammonia synthesis pressure is a high pressure, typically above 100 bar. In most applications the ammonia synthesis pressure is in the range of 100 bar to 300 bar, more preferably 120 bar to 250 bar. The hydrogen storage is also at a suitable high pressure, such as 200 bar for example. Accordingly, the hydrogen produced by the hydrogen generation section is normally compressed for storage and for feeding into the make-up gas line.

The above-mentioned parameters a), b) and c) can be controlled to satisfy the condition that the amount of hydrogen in the hydrogen tank is above a minimum amount and below a maximum amount to prevent emptying and overfilling of said hydrogen tank. For example the amount of hydrogen in the hydrogen tank can be maintained above a minimum corresponding to 10% to 30% of a nominal storage capacity of said tank and below a maximum corresponding to 70% to 90% of said nominal storage capacity.

If the storage is below a minimum or empty, there can be a risk of loss of reaction and shut-down. On the other hand, if the storage is full the plant may be unable to process all the generated hydrogen, so that part of the hydrogen must be vented and the renewable power is not fully exploited.

The above mentioned targets ii) and iii) are selected to maintain the ammonia converter in a condition of autothermal operation. Said condition of autothermal operation denotes a condition wherein heat recovered from the hot effluent of the reaction preheats the fresh feed gas to a sufficiently high temperature to maintain the reaction.

Typically the feed gas is preheated before it is catalytically reacted to form ammonia; the preheating of the feed gas is performed by transferring heat from the hot effluent of the ammonia synthesis reaction to the fresh feed gas; said condition of autothermal operation corresponds to a condition wherein the preheated feed gas has a temperature equal to or greater than a threshold temperature.

Said threshold temperature may be an input data of the inventive method. Said threshold temperature is selected to avoid undesired loss of reaction and risk of shutdown of the converter. Said threshold temperature may vary according to the catalyst used in the ammonia synthesis reaction. For catalyst typically used in the ammonia synthesis, said threshold temperature may be comprised between 300 °C and 400 °C, more frequently between 300 °C and 350 °C.

The preheating of the fresh gas is performed in a feed effluent heat exchanger, which may be part of the ammonia converter or a separate equipment.

In the fresh gas preheating, the heat content of the reaction effluent, that is the heat produced by the exothermic ammonia synthesis reaction, is used to preheat the fresh feed to a sufficiently high temperature for the subsequent reaction. If the temperature falls below a given threshold, the kinetics of the ammonia synthesis reaction and temperature of the effluent are reduced consequently, hence less heat is available for the feed gas preheating and the temperature tends to decrease further, leading to a shutdown of the converter. The method of the present invention is configured to avoid such loss of reaction and shutdown of the converter.

In other words the method of the invention maintains the ammonia converter in a condition of autothermal operation, also termed self-sustained operation.

Preferably, the above-mentioned target range ii) is selected so that the maximum load and minimum load of the ammonia converter are within design limits set to avoid the above described loss of reaction in the converter. Even more preferably the target range iii) is selected so that the rate change in the load of the ammonia converter is within design limits set to avoid the above described loss of reaction in the converter. Hence the invention gives a stable operation and, particularly, a reduced risk of extinction of the ammonia synthesis reaction in the converter during a ramp-down or ramp up.

The hydrogen delivered to the ammonia synthesis section is normally mixed with nitrogen in a suitable proportion to obtain ammonia make-up gas. Said ammonia make-up gas is fed to the ammonia synthesis loop which includes the ammonia converter.

According to the above-mentioned condition iii), the method controls the rate change over time of the flow rate of hydrogen delivered to the ammonia synthesis section, or of the flow rate of feed gas to the ammonia converter. The variation over time of said flow rates corresponds to a ramp up or ramp down of the load of the ammonia synthesis section, which should not exceed a certain maximum tolerated by the ammonia converter. The ramp is typically expressed in % over time, so for example a maximum ramp may be 100%/h. A maximum ramp may also be defined with reference to a shorter time period, for example 8% / 5min.

The load of the ammonia synthesis section is given by the flow rate of make-up gas that is processed by the ammonia synthesis section, hence it is proportional to the hydrogen received from the hydrogen generation section. Reference can also be made to the load of the ammonia synthesis loop.

The method of the invention may control the parameters a), b) and c) on the basis of the current load of the ammonia synthesis section. The parameters a), b) and c) may be controlled on the basis of one or more of: the current hydrogen output of the hydrogen generation section; the amount of hydrogen contained in the hydrogen tank; the amount of hydrogen transferred to the ammonia synthesis section; the current load of the ammonia synthesis section; one or more past values of the load of the ammonia synthesis section.

In a further embodiment, said parameters a), b) and c) are controlled to satisfy also the condition that said ammonia synthesis pressure is within a target range.

In a preferred embodiment, said items a), b) and c) are controlled on the basis of one or more set point signal/s and said one or more set point signal(s) are generated as a function of the amount of hydrogen contained in the hydrogen tank.

In preferred embodiments, hydrogen is stored in a gaseous form and therefore the amount of hydrogen contained in the tank can be measured by detecting the pressure in the tank. In some embodiments however the hydrogen may be stored in a liquid form and, in such case, the level of the liquid in the tank may also be detected.

In an embodiment, the method of the invention is carried out by means of a cascade control system comprising a master controller and a plurality of flow controllers which are configured as slave controllers relative to said master controller, wherein said master controller is sensitive to the amount of hydrogen contained in the tank, and said flow controllers act on a plurality of flow regulating valves arranged to control the flow rates in relation to the items a), b) and c).

Said cascade control system can be configured to prevent emptying and/or overfilling with hydrogen of said hydrogen storage unit and/or to provide hydrogen to the ammonia synthesis loop with a suitable flow rate and ramp to avoid the slowdown of the reaction's kinetics in the ammonia converter.

As above mentioned, when hydrogen is stored in gaseous form the master controller may comprise a pressure sensor arranged to sense the pressure of gaseous hydrogen in the hydrogen storage tank.

Said plurality of flow regulating valves may include:
one or more valves arranged to regulate a flow rate of hydrogen sent to the hydrogen storage tank and a flow rate of hydrogen sent to the ammonia synthesis section;
at least one valve arranged to regulate a flow rate of hydrogen withdrawn from the hydrogen storage tank.

In an embodiment, a single valve may be employed to control the flow rate of hydrogen sent to the hydrogen storage tank and the flow rate of hydrogen sent to the ammonia synthesis section. For example, a hydrogen delivery line may be split into a line directed to the tank and a line directed to the ammonia synthesis section, and a valve arranged on one of said lines may determine the flow rate of both. In an embodiment, for example, a first flow regulating valve is preferably used to directly regulate the amount of hydrogen flowing to the hydrogen storage tank and to indirectly regulate the amount of hydrogen flowing to the ammonia synthesis section; a second flow regulating valve is preferably used to regulate the amount of hydrogen taken from the hydrogen storage unit.

In another embodiment, said plurality of flow regulating valves includes a separate valve for controlling each of the above-mentioned flow rates.

The make-up gas flow rate transferred to the ammonia synthesis section is maintained within a target range suitable to maintain a stable and self-sustaining operation of the synthesis loop, particularly to avoid a cooling and shutdown of the ammonia converter. Said target range may be 1% to 110% or 10% to 110% or 20% to 110% of a nominal capacity of the ammonia synthesis section (i.e. load of the ammonia synthesis section and of the related loop). The nominal capacity denotes the ammonia that can be produced by the synthesis section under normal conditions.

In an embodiment, the method of the present invention may also feature a control of the synthesis loop pressure. The synthesis loop pressure may be controlled according to the hydrogen that can be delivered by the hydrogen generation section and, correspondingly, of the make-up gas that can be processed. The synthesis loop pressure may be controlled by determining a bypass flow rate of the ammonia converter, i.e. an amount of feed gas which circulates in the loop but bypasses the ammonia converter. Very preferably, the synthesis loop pressure can be controlled with the method described in WO 2021/089276.

A particularly interesting application of the invention concerns the hydrogen generation section including a water electrolyzer configured to produce hydrogen from water. More preferably said water electrolyzer is powered by renewable energy, such as solar energy or wind energy. A preferred application provides a water electrolyser coupled to a photovoltaic generation system.

The pressure at which hydrogen is produced, particularly by a water electrolyzer, is generally far below the ammonia synthesis pressure and the pressure for storage, therefore a compression is normally provided. Compression is performed normally with a multi-stage compressor, due to the high compression ratio. Preferably the compressor is an inter-cooled multi-stage unit.

Also the gaseous nitrogen is normally produced - e.g. by an air separation unit - at a low pressure, and compressed in a multi-stage nitrogen compressor.

The production of nitrogen must be controlled to adjust the hydrogen to nitrogen ratio in the make-up gas. In a preferred embodiment, the production of nitrogen is controlled with a dissipative method wherein nitrogen in excess, if any, is vented to the atmosphere.

An advantage of keeping the converter with a more stable operating condition, preventing possible extinction of the kinetics for an unbalanced gas with no stoichiometric ratio.

In an embodiment, a single hydrogen compressor is provided to send hydrogen to the storage tank and to the ammonia synthesis section. Said hydrogen compressor may have a delivery line which splits into a first line directed to the tank and a second line directed to the ammonia synthesis section. Said second line may merge with a nitrogen line to form the make-up gas. In this embodiment, if the storage pressure is less than synthesis pressure, the hydrogen withdrawn from the storage tank may be sent to the suction of the compressor, or to an intermediate stage thereof, to allow feeding the synthesis section with hydrogen taken from the storage tank. In another embodiment, separate compressors may be provided respectively for charging the storage tank and for feeding the synthesis section.

The invention further relates to an ammonia plant with a control system configured to implement the method as above described.

In a preferred embodiment, the plant comprises a front end for the production of ammonia including a water electrolyzer powered by renewable energy; a hydrogen compressor, a hydrogen storage unit, an ammonia synthesis loop, a nitrogen generation section, a conduit connecting the water electrolyzer to the hydrogen compressor and a conduit connecting the hydrogen compressor to the hydrogen storage unit.

The control system may comprise a pressure controller, a first flow controller and a second flow controller. The pressure controller is connected to the hydrogen storage unit, to the first flow controller and to the second flow controller.

The pressure controller may comprise a sensor adapted to measure the hydrogen retained in the hydrogen storage unit whilst the first flow controller and the second controller comprise respectively a first flow regulating valve and the second flow a second flow regulating valve.

The pressure controller may be configured to generated one or more setpoint signal/s based on the amount of hydrogen retained in the hydrogen storage unit and based on the amount of hydrogen produced in the hydrogen generation section. Said controller may be adapted to transmit said one or more setpoint signal/s to said first flow controller and to said second flow controller to regulate via said first flow regulating valve and via said second flow regulating valve the flow of hydrogen conveyed to the hydrogen storage unit, the flow of hydrogen conveyed to the ammonia synthesis loop and the flow of hydrogen withdrawn from the hydrogen storage unit.

Still another aspect of the invention is a process for the synthesis of ammonia, wherein the inventive method is implemented.

Significant advantages of the present invention include the following. The CAPEX of the ammonia plant is reduced because an H2 storage unit of small size can be used, and the ammonia plant can be kept into operation in a wider range of operating conditions. A flexible operation of the ammonia plant either islanded or semi-islanded can be achieved because a suitable flow rate of makeup gas can be fed to the converter so to maintain the ammonia converter in continuous operation. Emptying or overfilling with hydrogen of the hydrogen storage unit are avoided. The makeup gas flow variations overtime (ramps) are maintained within limits that are tolerable by the ammonia converter preventing a slowdown of the reaction or shutdown of the plant.

An interesting application of the invention concerns the retrofitting of existing ammonia plants. A method of retrofitting an ammonia plant according to the invention includes at least the provision of a control system configured to operate with the method as above described. The method may further include the addition of an electrolyzer for the production of hydrogen and of a hydrogen storage, if appropriate. If the plant comprises a hydrogen storage, the invention can be applied to the control of the existing storage.

The invention may be applied to retrofitting of conventional ammonia plants or hybrid ammonia plants. A conventional ammonia plant denotes a plant where hydrogen is produced from fossil fuels; a hybrid ammonia plant denotes a plant wherein hydrogen is produced partially from fossil fuels and partially from renewable energy. In a plant retrofitted according to the invention, more ammonia can be stably produced and a larger time variability of the hydrogen flow rate can be accepted.

### Example

The following is a description of an exemplary algorithm for the hydrogen storage control according to an embodiment of the present invention. The algorithm is described with a metalanguage and the following symbols are used:
LoadMin minimum flow in the synthesis loop
LoadMax maximum flow in the synthesis loop
RampUpMax maximum ramp-up allowed by the synthesis loop
RampDownMax maximum ramp-down allowed by the synthesis loop
FillMin min. filling of the hydrogen storage tank
FillMax max. filling of the hydrogen storage tank
Dt time resolution to check ramps
LoadPrec previous load of the synthesis loop (continuously updated)
FIC-1 flow controller of valve FCV1
FIC-2 flow controller of valve FCV2
FCV1 flow control valve to control the flow rate of hydrogen sent to the storage tank and the flow rate of hydrogen sent to the ammonia synthesis section
FCV2 flow control valve to control the flow rate of hydrogen withdrawn from the storage tank
MIN, MAX return the smallest or largest value in a given list
FILLING the current filling of the H2 storage in %

It is assumed that the valve FCV1 can control both the flow rate of hydrogen sent to storage and the flow rate of hydrogen sent to the synthesis section. This can be made e.g. by providing a setup with a hydrogen compressor delivering compressed hydrogen on a line that splits into a first line directed to the storage tank and a second line directed to the synthesis section. The valve FCV1 may be provided on said first line so that is control directly the hydrogen sent to storage via the first line and, consequently, the flow rate in the second line directed to the synthesis section.

The valve FCV2 may be provided on a line arranged to take hydrogen from the tank, e.g. from top of the tank, and directed to the suction side of the hydrogen compressor or to an intermediate stage of the compressor, so that the hydrogen withdrawn from storage is raised to a suitable pressure for feeding the synthesis section.

It is also assumed that hydrogen is generated by an electrolyzer connected to the suction side of said hydrogen compressor.

The filling of the hydrogen storage tank at time t (current filling) can be determined as Filling(t) = p(t) / p_{des} wherein p(t) is the current pressure of hydrogen in the tank and p_{des} is a reference pressure at 100% filling.

Dt represents the time resolution of the system. The variable LoadPrec is continuously updated referring to time (t - Dt).

Under the above conditions, an exemplary algorithm for controlling the hydrogen storage may be as follows.

### Step 1: Definition of setpoints of FIC-1 and FIC-2

In this step, the hydrogen flow rate generated by the electrolyzer (H2 generation load) is compared with the amount required for running the ammonia synthesis loop at its nominal flow rate. Based on the result of the comparison, and based on the current amount of hydrogen stored in the tank, the system determines the setpoints of the valves FCV1 and FCV2, i.e. if and how much hydrogen has to be stored or taken from the storage.

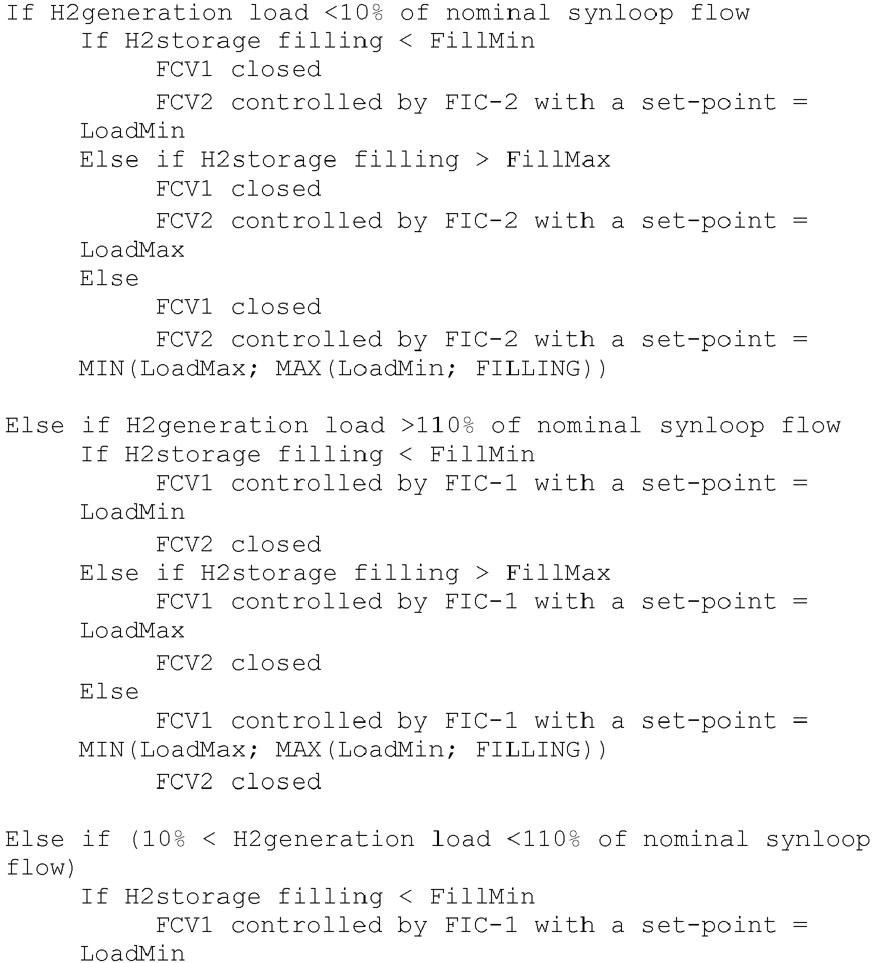

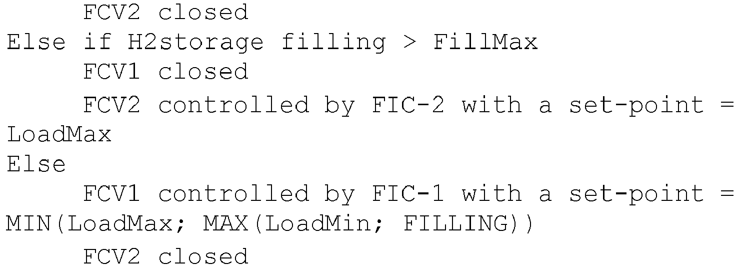

### Step 2: check of the maximum ramps up/down

In this step, the system uses the previous load of the loop to ensure that the ramp up or down does not exceed the limits tolerable by the loop itself.

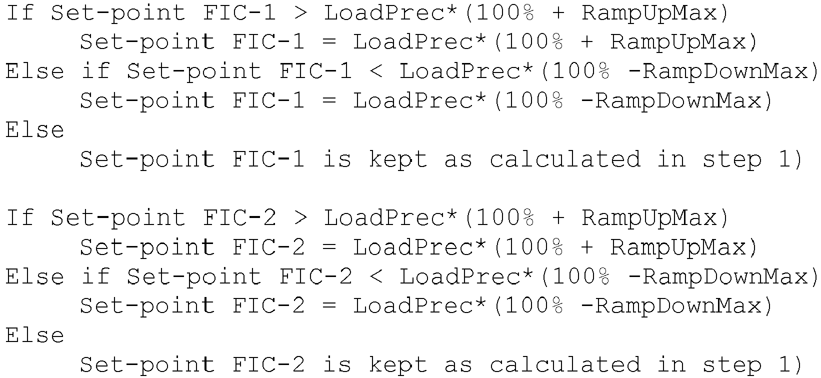

### Step 3: control of the loop pressure

The pressure of the synloop is controlled and kept constant acting on the bypass valve of the circulator. Optionally, the system may also reduce the pressure of the ammonia synthesis loop when the loop operates at a partial load, to save compression power and to mitigate the effects of the reduction of volumetric flow at partial load. Alternatively, ammonia can be injected upstream the converter to slow down the conversion at partial load.

### Description of the figures

Fig. 1 is a simplified diagram of an ammonia synthesis plant according to a first embodiment of the present invention.
Fig. 2 is a simplified diagram of an ammonia synthesis plant according to a second embodiment of the present invention.
Fig. 3 is a simplified diagram of an ammonia synthesis plant according to a third embodiment of the present invention.
Fig. 4 is a plot showing the typical availability of a wind energy source over a period of time.
Fig. 5 illustrates a variation of ammonia load overtime for a rigid and a flexible ammonia plant both powered by the wind energy source with the availability of Fig. 4.
Fig. 6 illustrates the hydrogen mass required to run the rigid and flexible ammonia plants of Fig.5.
Fig. 7 is a plot of the rate of formation of ammonia as a function of the temperature and for a typical industrial catalyst for the synthesis of ammonia.

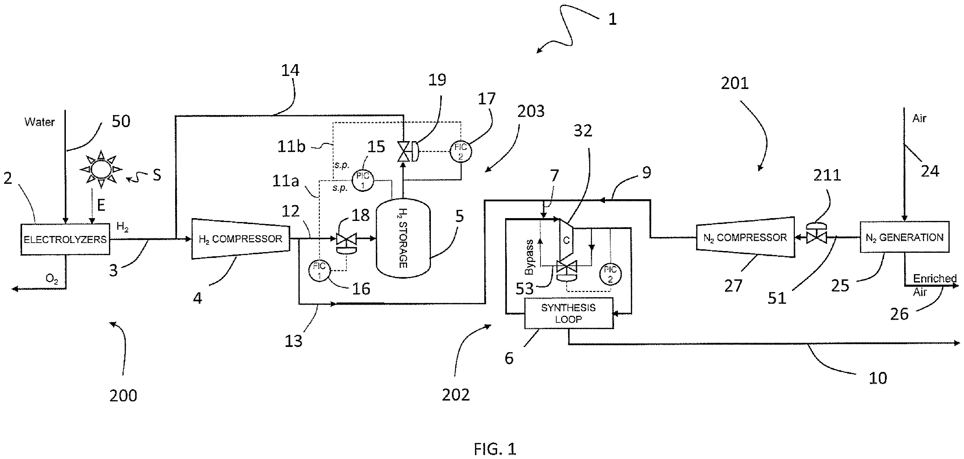

The ammonia plant 1 of Fig. 1 includes basically: a hydrogen generation section 200 for the generation of a hydrogen feed 13; a nitrogen production section 201 for the production of a nitrogen feed 9; an ammonia synthesis section 202 where said hydrogen feed 13 and nitrogen feed 9 are reacted to form ammonia product 10.

More in detail, the hydrogen generation section 200 includes a water electrolyzer 2 for the generation of a hydrogen stream 3 from a water feed 50; a hydrogen compressor 4; a hydrogen storage tank 5. The electrolyzer 2 is powered by electric power E provided by a renewable source which in Fig. 1 is a solar source S. The solar source S may be for example a photovoltaic field.

The nitrogen production section 201 includes a nitrogen generation unit 25 for the extraction of nitrogen 51 from an air feed 24 and a nitrogen compressor 27. Said nitrogen generation unit 25 may be an air separation unit (ASU) which also produces a stream 26 of oxygen or oxygen-enriched air.

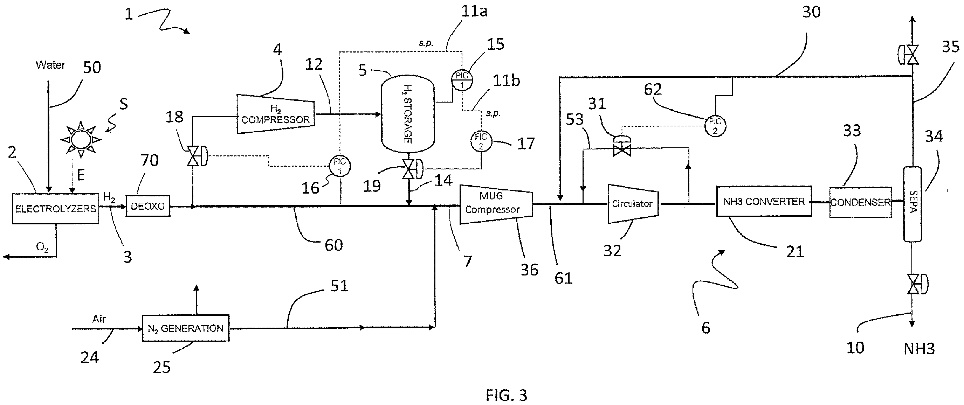

The ammonia synthesis section 202 includes an ammonia synthesis loop 6; a circulator 32 equipped with a bypass line 53. The circulator 32 receives a make-up gas 7 which includes the hydrogen feed 13 and the nitrogen feed 9. The ammonia synthesis loop 6 includes an ammonia converter, as illustrated in the embodiment of Fig. 3, wherein the make-up gas 7 is reacted over a suitable catalyst to form ammonia.

The hydrogen compressor 4 has a delivery line which splits into a first line to deliver the hydrogen feed 13 to the ammonia synthesis section 202 and a second line 12 to deliver hydrogen to the storage tank 5. A first flow regulating valve 18 is provided on said second line 12.

Hydrogen can be withdrawn from the storage tank 5 via a line 14 equipped with a second flow regulating valve 19. Said line 14 may be configured to introduce the stored hydrogen at the suction side of the compressor 4 or to an intermediate stage of the compressor. Accordingly, the synthesis section 202 may receive hydrogen directly as it is produced from the electrolyzer 2 and/or taken from the storage tank 5.

The ammonia plant 1 further includes a control system 203 configured to control the storage of hydrogen depending on the instant working conditions of the ammonia plant 1. More precisely, said control system 203 controls the above-mentioned valves 18, 19 and consequently the amount of hydrogen fed to the hydrogen tank 5 via the line 12; the amount of hydrogen withdrawn from the hydrogen tank 5 via the line 14; the amount of hydrogen conveyed to the ammonia synthesis section 202 via the line 13.

Said control system 203 comprises a pressure indicator controller 15 connected to a pressure sensor sensitive to the pressure of hydrogen in the hydrogen tank 5, a first flow indicator controller 16 connected to said first flow regulating valve 18, a second flow indicator controller 17 connected to said second flow regulating valve 19.

The regulation is performed according to a cascade control logic wherein the pressure indicator controller 15 acts as master controller and the first flow indicator controller 16 and second flow indicator controller 17 are configured as slave controllers. The pressure indicator controller 15 (master controller) detects the pressure inside the hydrogen tank 5 and, consequently, the amount of hydrogen stored in said tank 5. Based on said detection, the controller 15 provides setpoint signals 11a, 11b to the first flow indicator controller 16 and to the second flow indicator controller 17 (slave controllers).

Optionally, said master controller 15 may also receive a signal of the flow rate of hydrogen stream 3 provided by the electrolyzer 2 which represents the instant output of the electrolyzer 2, based on the power E made available by the source S. Accordingly the set point signals 11a, 11b can be calculated based on the content of the tank 5 and the current output of the electrolyzer 2.

The two slave controllers 16, 17 implement the set point signals 11a, 11b received by the master controller 15 and adjust the opening of said first flow control valve 18 and of said second flow control valve 19 according to said setpoint signals.

Looking at Fig. 1, it can be noted that the hydrogen 3 generated from the water electrolyzer 2 after being compressed can be directed to the hydrogen storage tank 5 via line 12 and/or to the ammonia synthesis section 202 via line 13 according to the opening of the first flow regulating valve 18. When appropriate, the hydrogen stored in said tank 5 can be withdrawn and used for the production of ammonia, by opening and controlling the second flow regulating valve 19.

The hydrogen 13 is mixed with the nitrogen 9 to generate a makeup gas 7 having a suitable N/H ratio for the synthesis of ammonia. The proper amount of nitrogen is controlled by means of a valve 211.

The hydrogen feed in line 13, together with the nitrogen feed in line 9, form the make-up gas input flow 7 of the ammonia synthesis loop 6. The bypass line 53 provides that a portion of the makeup gas delivered by the circulator 32 can bypass the synthesis loop 6. Said bypass line 53 allows to control the flow rate of makeup gas entering the synthesis loop 6 so as to indirectly control the pressure or the temperature in the ammonia converter.

Said bypass of the synthesis loop may be useful to control the ammonia converter pressure and keep the ammonia converter under proper working condition (self-sustaining condition) when the ammonia plant is run at partial load. A preferred control system for this purpose is disclosed in WO2021/089276 and can be combined with the method of the present invention.

By providing an adaptive control of the hydrogen storage, the invention avoids emptying and overfilling of the hydrogen storage tank 5 and allows to feed the synthesis loop with acceptable flow variation over time (ramps) so to maintain a self-sustaining operation of the ammonia synthesis loop. All the above is made possible with a comparatively small size of the storage tank 5, then a reduced cost of the same.

The control logic of the example that has been detailed above in this description can be applied to the layout of Fig. 1, wherein valve 18 corresponds to FCV1 and valve 19 corresponds to FCV2.

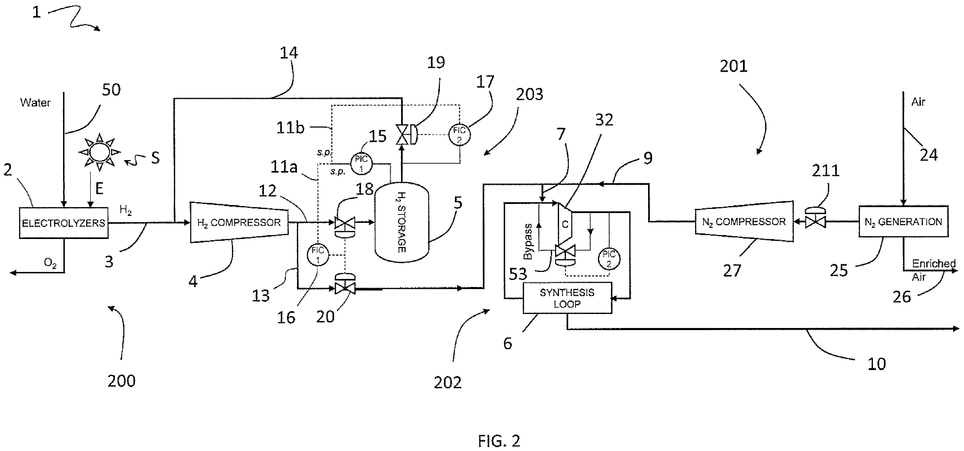

Fig. 2 shows an embodiment similar to that of Fig. 1, wherein the flow of hydrogen conveyed to the ammonia synthesis section 202 is controlled by an additional flow regulating valve 20 installed on the line 13.

Preferably, as shown in Fig. 2, the flow indicator controller 16 controls the above-described valve 18 and said additional valve 20 based on the setpoint signal 11a transmitted by the master controller 15.

Fig. 3 shows another embodiment wherein the items corresponding to those of Figs. 1-2 are denoted by the same reference numbers for simplicity.

In Fig. 3, the line 14 of the hydrogen withdrawn from the tank 5 connects to a hydrogen line 60 which is in parallel to the hydrogen compressor 4 feeding the tank 5. The nitrogen feed line 51 also connects to said line 60. Accordingly, a main make-up gas compressor 36 is provided for compression of the make-up gas 7. The compressor 4 in this embodiment serves only as a boost compressor to feed hydrogen to the storage tank 5.

A deoxygenation reactor 70 is also shown, which is arranged after the water electrolyzer 2 to remove traces of oxygen from the hydrogen 3 produced in said electrolyzer 2. A deoxygenation reactor can also be provided in the schemes of Fig. 1 and Fig. 2.

A first flow regulating valve 18 is arranged on a feed line of the boost compressor 4; a second flow regulating valve 19 is arranged on the line 14. Said valves 18, 19 are governed by controllers 15, 16 with setpoints 11a, 11b provided by the master controller 15. The control system operates substantially in the same way as disclosed in preferred embodiment of Fig. 1 and Fig. 2.

The main compressor 36 delivers a compressed makeup gas 61 to the ammonia synthesis loop 6.

The ammonia synthesis loop 6 is illustrated in a greater detail in Fig. 3. It comprises a circulator 32, an ammonia converter 21 for the synthesis of ammonia 32, a condenser 33 and a separator 34 to separate a liquid ammonia stream 10 from a gaseous recycling stream 35 that contains unreacted hydrogen and nitrogen and residual vapours of ammonia.

The circulator 32 comprises a bypass line 53 provided with a valve 31 to regulate a flow of makeup gas 61 delivered by the circulator 32 which bypasses the converter 21 going back to the suction side of the circulator 32. A portion of the gaseous recycling stream 35 extracted from the separator 34 can also be recycled to the suction side of the circulator 32 via a recycling line 30.

The plant further comprises a pressure indicator controller 62 that can be used to sense a pressure of said portion of gaseous recycling stream 35 circulating in the line 30 and to send a setpoint signal to the flow control valve 31 to control the flow of the compressed makeup gas recirculated in the bypass line 53.

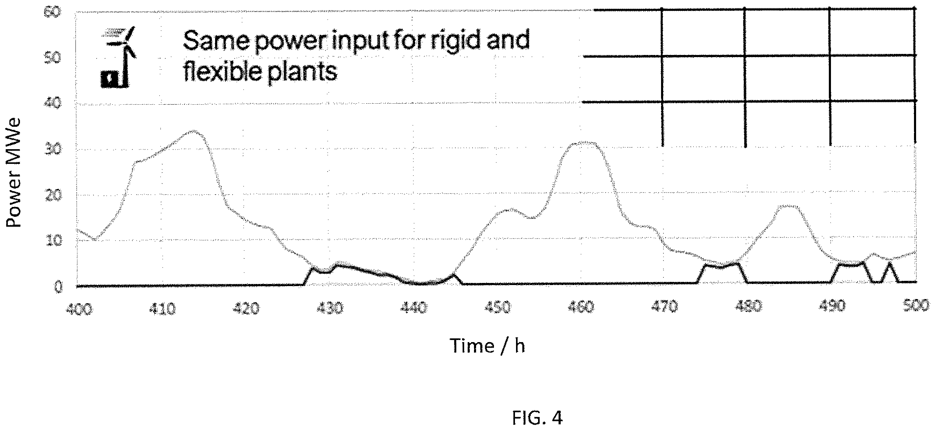

Figs. 4 to 6 provide a further evidence of the advantages of the invention.

Fig. 4 illustrates a plot showing the fluctuating availability of a power source connected to the electrolyzer 2, over a period of 100 hours.

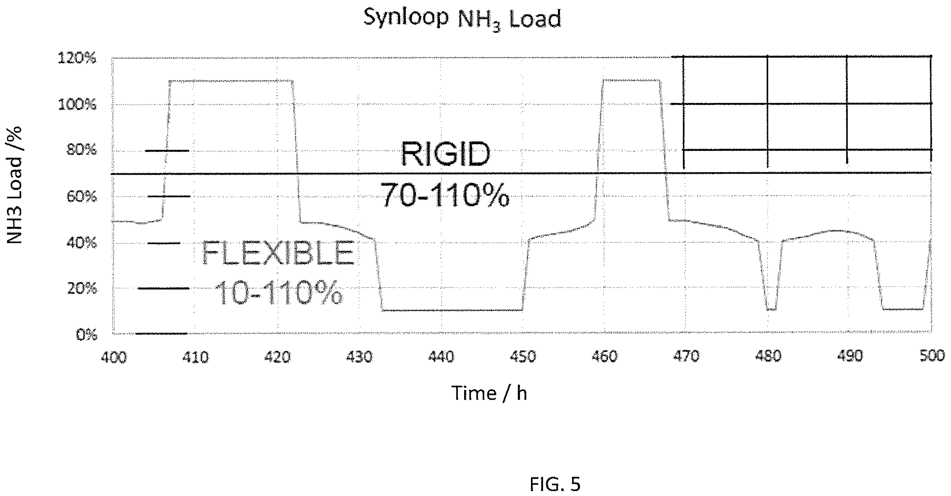

Fig. 5 contains two plots of a variation of the load of an ammonia plant over the time period of Fig. 4. A first plot relates to a so-called rigid plant that is a conventional ammonia plant running between 70% and 110% of the nominal load. The second plot relates to a flexible plant operated according to the method of the invention, wherein the load may vary from 10% to 110% of the nominal load.

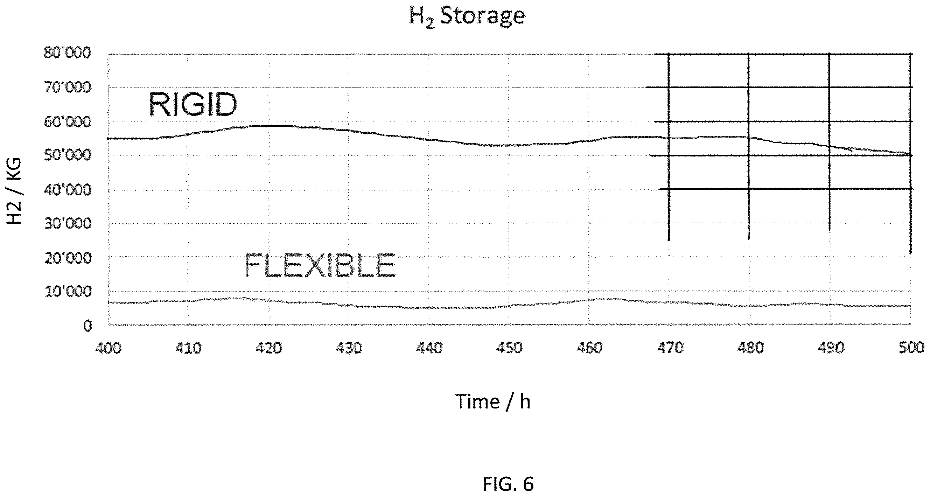

Fig. 6 plots the mass of hydrogen that must be stored (e.g. retained in the hydrogen tank 5) to ensure a stable operation of the ammonia plant according to the two options of Fig. 5.

Particularly, Fig. 6 illustrates that the maximum hydrogen storage is reduced from up to 60'000 kg to less than 10'000 kg. Accordingly, the size and cost of the hydrogen tank are greatly reduced. Assuming for example a hydrogen storage cost of 450 USD per kg of hydrogen stored, the applicant has calculated that the levelized cost of ammonia can be reduced by around 33%.

Fig. 4 reflects a variation of the source that can be found e.g. in a wind-powered setup. If solar power is used, with a more periodic variation (day/night) the invention is even more advantageous and the hydrogen storage size can be further reduced.

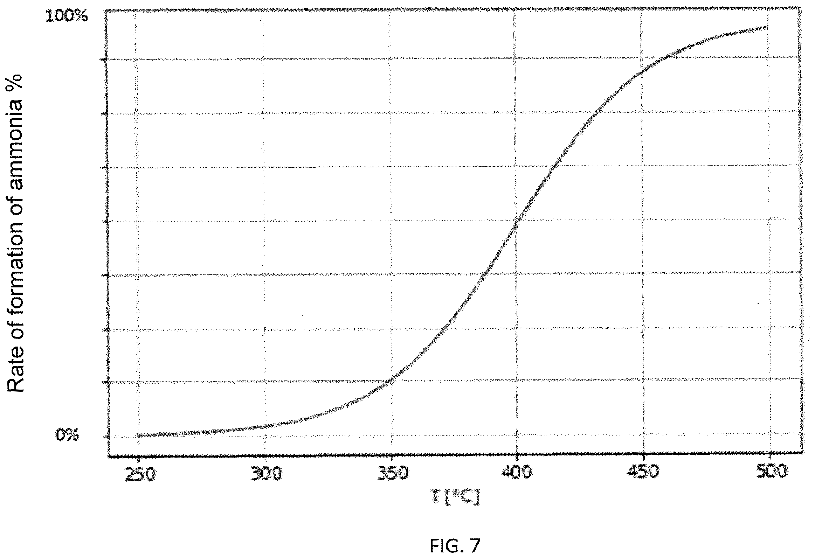

Fig. 7 illustrates a typical plot of rate of formation of ammonia Vs. temperature. The Fig. 7 refers to ammonia synthesis performed at 150 bar over an iron-based catalyst and hydrogen to nitrogen ratio of 3. The plot shows that the rate of formation of ammonia decreases dramatically below 400 °C. Based on the catalyst, a threshold temperature for autothermal operation can be defined, generally between 300 °C and 350 °C. The method of the invention, by controlling the flow rate and maintains the ammonia converter running and avoids a condition of loss of reaction and converter shutdown.

## Claims

1. Method for controlling an ammonia plant (1), wherein:
the ammonia plant (1) comprises:
an ammonia synthesis section (202) including an ammonia converter where ammonia is synthesized at an ammonia synthesis pressure starting from a feed gas including hydrogen and nitrogen;
a hydrogen generation section (200) configured to produce gaseous hydrogen (3);
a hydrogen storage tank (5) connected to the hydrogen generation section;
the method comprises controlling:
a) a total amount of hydrogen (13) delivered by the hydrogen generation section to said ammonia synthesis section;
b) in the amount of hydrogen of item a), a proportion between hydrogen currently produced in the hydrogen generation section and hydrogen withdrawn from said storage tank, wherein hydrogen from the storage tank ranges from null to 100% of the amount a);
c) an amount of hydrogen sent to the hydrogen storage tank (5);
wherein said items a), b) and c) are controlled so that the following parameters are maintained within respective target ranges:
i) the amount of hydrogen contained in the hydrogen tank (5);
ii) the flow rate of hydrogen delivered to the ammonia synthesis section and/or the flow rate of feed gas reacted in the ammonia converter;
iii) the rate change over time of at least one of the flow rates of point ii) above,
wherein the target ranges ii) and iii) are selected to keep the ammonia converter in a condition of autothermal operation,
wherein: the feed gas is preheated before it is catalytically reacted to form ammonia; the preheating of the feed gas is performed by transferring heat from the hot effluent of the ammonia synthesis reaction to the fresh feed gas; said condition of autothermal operation corresponds to a condition wherein the preheated feed gas has a temperature equal to or greater than a threshold temperature.

2. Method according to claim 1 wherein a), b) and c) are controlled so that the amount of hydrogen in the hydrogen tank (5) is maintained above a minimum amount and below a maximum amount to prevent emptying and overfilling of said hydrogen tank.

3. Method according to claim 2 wherein a), b) and c) are controlled to satisfy also the condition that said ammonia synthesis pressure is within a target range.

4. Method according to any of the previous claims wherein a), b) and c) are controlled on the basis of one or more of: the current hydrogen output of the hydrogen generation section; the amount of hydrogen contained in the hydrogen tank (5); the current load of the ammonia synthesis section; one or more past values of the load of the ammonia synthesis section.

5. Method according to any of the previous claims wherein a), b) and c) are controlled on the basis of one or more set point signals (11a, 11b) and said one or more set point signals are generated as a function of the amount of hydrogen contained in the hydrogen tank (5).

6. Method according to any of the previous claims wherein the method is carried out by means of a cascade control system comprising a master controller (15) and a plurality of flow controllers (16, 17) which are configured as slave controllers relative to said master controller, wherein said master controller is sensitive to the amount of hydrogen contained in the tank (5), and said flow controllers act on a plurality of flow regulating valves (18, 19, 20) arranged to control a), b) and c).

7. Method according to claim 6 wherein the master controller (15) comprises a pressure sensor arranged to sense the pressure of gaseous hydrogen in the hydrogen storage tank (5).

8. Method according to claim 6 or 7 wherein said plurality of flow regulating valves includes:
one or more valves (18, 20) arranged to regulate a flow rate of hydrogen (12) flowing to the hydrogen storage tank (5) and a flow rate of hydrogen sent to the ammonia synthesis section;
at least one valve (19) arranged to regulate a flow rate of hydrogen (14) withdrawn from the hydrogen storage tank (5).

9. Method according to claim 8, wherein said plurality of flow regulating valves includes at least a first valve arranged to control the flow rate of hydrogen sent to the storage tank; a second valve arranged to control flow rate of hydrogen withdrawn from the storage tank; a third valve arranged to control the flow rate of hydrogen delivered to the ammonia synthesis section.

10. Method according to any of the previous claims wherein the amount of hydrogen in the hydrogen tank (5) is maintained above a minimum corresponding to 10% to 30% of a nominal storage capacity of said hydrogen tank (5), and below a maximum corresponding to 70% to 90% of said nominal storage capacity.

11. Method according to any of the previous claims wherein the hydrogen delivered to the ammonia synthesis section is maintained within 10% to 110% of a nominal capacity of said synthesis section.

12. Method according to any of the previous claims, further including controlling the pressure in the ammonia synthesis converter, preferably by controlling a flow rate of feed gas bypassing the converter.

13. Method according to any of the previous claims, wherein, in the hydrogen generation section (200), hydrogen is produced from electric power and said electric power is variable over time, preferably wherein said electric power is a renewable power.

14. Method according to any of the previous claims wherein the hydrogen generation section includes a water electrolyzer configured to produce hydrogen (3) from water, preferably wherein said water electrolyzer is powered by renewable energy, more preferably being solar-powered.

15. Method according to any of the previous claims wherein hydrogen is produced from renewable power and the ammonia plant is not connected to an electric grid, wherein the plant includes a backup power system arranged to provide at least the power for the operation of the ammonia plant in a condition wherein low or no hydrogen is produced by the hydrogen generation section and the hydrogen input for the ammonia production is provided predominantly or entirely by the hydrogen storage.

16. Method according to claim 15 wherein, during operation with backup power, said backup power is produced by any of: a gas turbine, a gas engine, fuel cells or suitable batteries, wherein said gas turbine, gas engine and fuel cells are preferably fired with hydrogen or ammonia.

17. Method according to any of the previous claims, wherein the plant includes a nitrogen generation section, and the method includes that the production of nitrogen is controlled with a dissipative method wherein nitrogen in excess, if any, is vented to the atmosphere.

18. An ammonia plant (1) for the synthesis of ammonia comprising:
an ammonia synthesis section (202) including an ammonia converter where ammonia is synthesized at an ammonia synthesis pressure;
a hydrogen generation section (200) configured to produce hydrogen (3) for use in the ammonia synthesis section for the synthesis of ammonia;
a hydrogen storage tank (5) connected to the hydrogen generation section;
a make-up gas line arranged to feed ammonia make-up gas to said ammonia synthesis section, said ammonia make-up gas comprising hydrogen produced in said hydrogen generation section and nitrogen in a suitable proportion;
a control system configured to implement the method of any of claims 1 to 17.

19. Ammonia plant according to claim 18, wherein the hydrogen generation section (200) includes a water electrolyzer (2) configured to produce hydrogen (3) from water, said water electrolyzer being powered by renewable energy, preferably by solar power.

20. Ammonia plant according to claim 18 or 19 wherein the ammonia plant is not connected to an electric grid, wherein the plant includes a backup power system arranged to provide at least the power for the operation of the plant when low or no hydrogen is produced by the hydrogen generation section and the hydrogen input for the production of ammonia is taken predominantly or entirely from the hydrogen storage, wherein said backup power system includes preferably any of a gas turbine, a gas engine, fuel cells or suitable batteries, and said gas turbine, gas engine and fuel cells are more preferably fired with hydrogen or ammonia.

21. Ammonia plant according to claim 20 wherein said backup power system is arranged to produce a backup power which is 10% or less of a peak power required by the ammonia plant at a nominal load.

22. A process for the synthesis of ammonia comprising:
ammonia is synthesized by reacting a suitable make-up gas (7) at an ammonia synthesis pressure in an ammonia synthesis section (202) including an ammonia converter;
hydrogen is produced in a hydrogen generation section (200) and used to produce said make-up gas and/or stored in a hydrogen tank;
the process further including:
controlling a flow rate of hydrogen (12) sent from the hydrogen generation section (200) to said hydrogen tank (5) for storage;
controlling a flow rate of hydrogen (14) withdrawn from said hydrogen storage tank (5) for use in the ammonia synthesis section;
controlling a flow rate of hydrogen (13) delivered by the hydrogen generation section to the ammonia synthesis section;
wherein said flow rates are controlled with a method according to any of claims 1 to 17.

23. A method of retrofitting an ammonia plant, including the provision of a control system configured to operate with the method of any of the claims 1 to 17.
